## Europäisches Patentamt

## European Patent Office

## Office européen des brevets

(11) Veröffentlichungsnummer: **0 171 482**
**B1**

(12) **EUROPÄISCHE PATENTSCHRIFT**

(45) Veröffentlichungstag der Patentschrift:
**18.05.88**

(21) Anmeldenummer: **84810405.5**

(22) Anmeldetag: **17.08.84**

(51) Int. Cl.⁴: **C 09 D 3/72,** C 09 D 7/06,
C 08 G 18/08, B 05 D 7/06

(54) Verfahren zur Herstellung einer Beschichtung auf ein Trägermaterial.

(43) Veröffentlichungstag der Anmeldung:
**19.02.86 Patentblatt 86/8**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
GB-A-1 455 706
US-A-4 391 742

(73) Patentinhaber: **Bandi, Werner, Hofacker, CH- 3251
Oberwil b.B. (CH)**

(72) Erfinder: **Bandi, Werner, Hofacker, CH- 3251
Oberwil b.B. (CH)**

(74) Vertreter: **Seehof, Michel, c/o AMMANN
PATENTANWAELTE AG BERN Schwarztorstrasse
31, CH- 3001 Bern (CH)**

## Beschreibung

Die vorliegende Erfindung bezieht sich auf ein Verfahren zur Herstellung einer Beschichtung auf ein Trägermaterial, wobei die Beschichtung ein Zweikomponenten-Polyurethan-Email ist und eingebrannt wird.

Solche Beschichtungen auf der Basis von Zweikomponenten Polyurethan-Email sind bekannt und werden vorwiegend zum Beschichten von Metallteilen und farblos auch Holz verwendet. Insbesondere bei der Beschichtung von Holz sind die herkömmlichen Verfahren jedoch nicht zufriedenstellend, es kann darauf keine glatte Oberfläche erzielt werden und bei durchsichtigen Beschichtungen lässt die Homogenität und die Durchlässigkeit der Schicht zu wünschen übrig.

Es ist demgegenüber Aufgabe der vorliegenden Erfindung ein Verfahren zur Herstellung einer Beschichtung anzugeben, mit welchem eine spiegelglatte Oberfläche und im Falle einer durchsichtigen Beschichtung eine optisch homogene Schicht hergestellt werden kann. Die Aufgabe wird mit einem in den Ansprüchen beschriebenen Verfahren gelöst.

Die Erfindung wird im folgenden anhand von Ausführungsbeispielen näher erläutert.

Ein wesentlicher Punkt um eine bessere Oberfläche und eine bessere optische Homogenität zu erzielen, und um eine weit grössere Schichtdicke zu erzielen, ist die Beimischung von verschiedenen Mitteln, um das Zweikomponenten-Polyurethan-Email besser verarbeiten zu können. Die beiden Hauptkomponenten der Beimischungen sind einerseits Verlaufmittel und andererseits Entwässerungsmittel, die bei geeignetem Einbrennen die vorteilhaften Eigenschaften ergeben. Als Verlaufmittel werden verwendet: 0,05-0,15 Gew.-% Siliconöl, 0,75-0,5 Gew.-% eines anderen Verlaufmittels, bekannt unter dem Handelsnamen Biketol ® und als Entwässerungsmittel 1,5-2,5 Gew.-% Monoisocyanat mit 0,5-1,5 Gew.-% Ameisensäure-Ester (Entwässerungsmittel). Es ist überhaupt wesentlich, dass alle Beschichtungsstoffe, auch die Spritzfüller und Härter vollständig entwässert sein müssen. Selbstverständlich können dazu noch weitere Zusätze beigegeben werden, um beispielsweise Färbungen oder Imitationen hervorzurufen, wie beispielsweise Zusätze von Edel- oder Buntmetallpartikel einen metallisierten Eindruck hervorrufen können oder gewisse Beimischungen und von anderen Farben Äthylglykolazetat den Eindruck von Marmor erwecken können. Ausserdem ist es möglich, bei entsprechenden Trägermaterialien Zusätze beizumengen, durch welche ein besserer Brandschutz gewährleistet werden kann, z.B. Tischblätter.

Zur Durchführung des Verfahrens wird zunächst das Trägermaterial gegebenenfalls, d.h. falls es sich um eine Beschichtung von porösen Trägermaterialien wie Holz handelt, mit Spritzfüller auf Polyurethanbasis beschichtet, um jegliche Poren abzuschliessen. Dann erfolgt ein Zwischenschliff und anschliessend wird mittels einer sogenannten Airless-Hochdruck-Spritzanlage ohne Ölfeuchtigkeit, ohne Wasserpartikel und ohne Luftzusatz unter ständigem Rühren des Beschichtungsmaterials eine Beschichtung ungefähr bei Zimmertemperatur, d.h. zwischen 20 und 30° C, vorzugsweise bei 25° C, durchgeführt. Dieser Vorgang kann sich einige Male mit jeweiligem Zwischenschliff mit Korngrösse 400-600 μm wiederholen, wobei dies selbstverständlich von der Unterlage und der gewünschten Beschichtungsdicke abhängt.

Nach dem Beschichtungsvorgang wird der Gegenstand einer Einbrennanlage zugeführt und dort während maximal 45 Min. auf 60° C gebracht und anschliessend während 4 Std. eingebrannt.

Eine derart erhaltene Schicht ist sehr widerstandsfähig und weist eine spiegelglatte Oberfläche auf. Im Falle einer durchsichtigen Schicht ist auch die optische Homogenität sehr gut. Eine solche Beschichtung lässt sich ausserdem jederzeit ohne Randbildung reparieren.

Eine solche Beschichtung nach dem oben beschriebenen Verfahren eignet sich besonders für das Beschichten von Holz und dort, bei Beschichtung mit durchsichtigen Material, für das Beschichten von Edelhölzern. Wie eingangs erwähnt, kann aber auch jedes andere geeignete Trägermaterial, wie Metall, gemäss obigem Verfahren beschichtet werden, wobei in diesem Fall in der Regel das Füllen des Materials sowie das Abschleifen entfallen kann.

Selbstverständlich muss der ganze Vorgang solange nass, nicht nur frei von jeglichen Wasserpartikel sein, sondern auch absolut staubfrei sein. Die Staubpartikel müssen unter 15-20 μm sein.

Byketol ®: Verlaufmittel auf Basis eines Gemisches hochsiedender Aromaten, Ketone und Ester.

## Patentansprüche

1. Verfahren zur Herstellung einer Beschichtung auf ein Trägermaterial, wobei die Beschichtung ein Zweikomponenten-Polyurethan-Email ist und eingebrannt wird, dadurch gekennzeichnet, dass dem Beschichtungsmaterial vor dem Einbrennen Verlaufmittel und Mittel zur vollständigen Entwässerung beigegeben werden und dass das Beschichtungsmaterial in einer Airless-Hochdruck-Spritzanlage ohne Ölfeuchtigkeit, ohne Wasserpartikel und ohne Luftzusatz unter ständigem Rühren aufgetragen wird.

2. Verfahren nach Anspruch 1, dadurch gekennzeichnet, dass dem Beschichtungsmaterial als Verlaufmittel 0,05 bis 0,15 Gew.-% Siliconöl, 0,5 bis 1,5 Gew.-%

Verlaufmittel auf Basis eines Gemisches hochsiedender Aromaten, Ketone und Ester und als Entwässerungsmittel 1,5 bis 2,5 Gew.-% Monoisocyanat und 0,5 bis 1,5 Gew.-% Ameisensäureester beigegeben werden.

3. Verfahren nach Anspruch 1, dadurch gekennzeichnet, dass die Beschichtung bei 20 bis 30°C durchgeführt wird und dass das beschichtete Material anschliessend in eine Einbrennanlage überführt wird und dort die Temperatur während max. 45 Min. auf 60°C erhöht wird und die Einbrennung während vier Stunden bei dieser Temperatur erfolgt.

4. Verfahren nach einem der Ansprüche 1 bis 3, dadurch gekennzeichnet, dass dem Beschichtungsmaterial Edel- oder Buntmetallpartikel, Farben oder Äthylenglykolacetat beigemischt wird.

5. Verfahren nach einem der Ansprüche 1 bis 4, dadurch gekennzeichnet, dass als Trägermaterial Holz verwendet wird und das Trägermaterial zuerst mit Spritzfüller auf Polyurethanbasis beschichtet und anschliessend geschliffen wird, woraufhin eine Beschichtung mit dem Beschichtungsmaterial erfolgt, wobei dieser Vorgang gegebenenfalls mehrmals wiederholbar ist und alle Komponenten vollständig entwässert werden.

## Claims

1. A method for applying a coating to a substrate, the coating being a two components polyurethane enamel and being baked, characterized in that before the backing a levelling additive and an agent for a complete dehydratation are added and in that the coating material is applied in an airless, high pressure spraying installation without oil damp, without particles of water and without addition of air, under continuous stirring.

2. A method according to claim 1, characterized in that the levelling additive added to the coating material is .05 to .15 % by weight of silicone oil, .5 to 1.5 % by weight of a levelling additive on the base of a mixture of high boiling aromatic substances, ketones and ethers and in that the dehydratation agent added is 1.5 to 2.5 % by weight of monoisocyanate and .5 to 1.5 % by weight of formic ether.

3. A method according to claim 1, characterized in that the coating is executed at 20 to 30°c and in that the coated material is then transferred to a baking installation in which the temperature is increased to 60°C during 45 min. at maximum and in that the baking takes place during four hours at this temperature.

4. A method according to one of the claims 1 to 3, characterized in that particles of precious or non ferrous metals, colours or ethylene glycol acetate are added to the coating material.

5. A method according to one of the claims 1 to 4, characterized in that wood is utilized as substrate and in that the substrate is coated at first with a spraying filler on the base of polyurethane and then polished, afterward a coating with the coating material is executed, this process being repeated as the case may arise, all components being completely dehydrated.

## Revendications

1. Procédé pour appliquer un revêtement sur un substrat, le revêtement étant un émail polyuréthane à deux composants et soumis à la cuisson, caractérisé en ce qu'avant la cuisson, un agent de nivellement et un agent pour une deshydratation complète sont ajoutés et en ce que le matériau de revêtement est appliqué dans une installation de pulvérisation sans air, à haute pression, sans moiteur d'huile, sans particules d'eau et sans apport d'air, en remuant constamment.

2. Procédé selon la revendication 1, caractérisé en ce que l'agent de nivellement ajouté au matériau de revêtement est 0,05 à 0,15 % en poids d'huile de silicone, 0,5 à 1,5 % en poids d'un agent de nivellement à base d'un mélange d'aromates, cétones et éthers à haut point de fusion et en ce que l'agent de déshydratation ajouté est 1,5 à 2,5 % en poids de monoisocyanate et 0,5 à 1,5 % en poids d'éther formique.

3. Procédé selon la revendication 1, caractérisé en ce que le revêtement est exécuté à 20 à 30°C et en ce que le matériau revêtu est ensuite amené dans une installation de cuisson dans laquelle la température est augmentée à 60°C pendant 45 min. au maximum et en ce que la cuisson est effectuée pendant quatre heures à cette température

4. Procédé selon l'une des revendications 1 à 3, caractérisé en ce que des particules de métaux nobles ou non ferreux, des couleurs ou de l'acétate d'éthylglycol sont ajoutés au matériau du revêtement.

5. Procédé selon l'une des revendications 1 à 4, caractérisé en ce que du bois est utilisé comme substrat et en ce que le substrat est d'abord revêtu d'un remplissage par pulvérisation sur base de polyuréthane et ensuite poli, après quoi un revêtement avec le matériau de revêtement est exécuté, ce processus étant renouvelé le cas échéant plusieurs fois, tous les composants étant entièrement déshydratés.